# DEMANDE DE BREVET EUROPEEN

(11) **EP 2 143 777 A1**
(43) Date de publication de la demande: **13.01.2010**
(21) Numéro de dépôt: 09162017.9
(22) Date de dépôt: 05.06.2009
(51) Int. Cl.: C10G 3/00, C10G 45/02, C10G 47/00, C10G 65/12, C10L 1/02

(54) **Procédé d'hydrocraquage permettant l'incorporation d'un biocarburant dans un carburant**

(30) Priorité: 30.06.2008 FR 0803658
(71) Demandeur: Total Raffinage Marketing, 92800 Puteaux (FR)
(72) Inventeur: Gueret, Christophe, 76600 Le Havre (FR); Patrigeon, Anne, 76700 Harfleur (FR); Mayeur, Vincent, 76330 Notre-Dame-De-Gravenchon (FR)
(74) Mandataire: Largeau, Béatrice

(57) **Abrégé**

L'invention concerne un procédé d'hydrocraquage d'une charge d'origine pétrolière dans lequel la charge d'origine pétrolière subit un hydrotraitement dans un réacteur de prétraitement en lit fixe suivi d'un hydrocraquage dans au moins un réacteur d'hydrocraquage en lit fixe, **caractérisé en ce qu**'une charge d'origine biologique du type huiles végétales et/ou animales est introduite dans ledit réacteur de prétraitement.

## Description

L'invention concerne un procédé d'hydrocraquage permettant l'incorporation d'un biocarburant dans un carburant.

En raison de la sévérisation des normes antipollution pour les moteurs diesel, les spécifications des gazoles moteurs au cours des deux dernières décennies ont évolué et font apparaître de nouvelles contraintes qui ont conduit à une modification des formulations des mélanges de gazoles moteurs.

Les bases recherchées sont des bases légères, sans soufre, à indice de cétane élevé, et distillant complètement avant 360°C.

Une solution pour améliorer l'indice de cétane consiste à ajouter un additif pro-cétane. Il s'agit le plus souvent de nitrates d'alkyle qui interviennent dans les étapes élémentaires d'oxydation avant l'auto-inflammation du mélange. Ils réduisent ainsi le délai d'inflammation et permettent d'accroître l'indice de cétane de 3 à 5 points selon la quantité ajoutée. Ils sont toutefois d'autant moins efficaces que l'indice de cétane d'origine est faible.

Une autre solution consiste à ajouter au mélange un carburant de substitution, tel qu'un biocarburant, car les esters d'huiles végétales présentent généralement un bon indice de cétane.

De ce fait, la directive européenne 2003/30/CE vise notamment à promouvoir l'utilisation de biocarburants. Dans les transports, la communauté européenne a adopté un objectif de part de biocarburants de 5,75% du PCI (Pouvoir calorifique Inférieur) des carburants en 2010. C'est-à-dire que la quantité de biocarburant présente dans le mélange doit procurer 5,75% du PCI du mélange.

Actuellement, le gouvernement français a instauré une taxe : la TGAP (Taxe Générale des Activités Polluantes), qui concerne les carburants mis à la consommation sur le territoire français. Les carburants soumis à cette taxe sont le « SP95 », le « SP98 » et le « Gazole Moteur ». L'objectif de cette taxe est d'inciter l'incorporation de Biocarburant d'origine agricole en augmentant progressivement le %PCI (Pouvoir Calorifique Inférieur) de 1,75% en 2006 à 7,00% en 2010.

Cet ajout est réalisé sur la base énergétique et l'origine « Bio » des produits incorporés. Ainsi, l'ETBE (éthyl tertiobutyléther) voit son taux réduit puisqu'il ne contient que 47% d'éthanol (d'origine agricole) et un PCI inférieur à l'essence.

Pour les gazoles moteurs, les biocarburants les plus couramment utilisés sont les esters d'huile végétale, comme l'ester méthylique d'huile de colza (EMC).

Ces gazoles moteurs sont en général obtenus par mélange du biocarburant au gazole moteur après traitement de ce dernier. Ces mélanges sont ainsi souvent effectués par les distributeurs, juste avant la mise en distribution du carburant.

Les mélanges obtenus à partir d'esters méthyliques d'huile végétale présentent l'avantage d'un cétane conforme à la norme, mais leur densité est très supérieure à la spécification de la norme (supérieure à 800 kg/m³), ce qui entraîne des difficultés de formulation à des taux d'incorporation élevés.

On connaît déjà des procédés de raffinage de la biomasse qui ont été élaborés pour produire des biocarburants. Ainsi, les documents US 4 992 605, US 5 705 722 et SE 520 633 décrivent des procédés d'hydrotraitement des triglycérides formant les huiles végétales.

On connaît également des procédés d'hydrocraquage d'huiles végétales permettant d'obtenir des gazoles.

Par exemple, le document FR 2 607 803 décrit un procédé d'hydrocraquage sous pression d'huiles végétales. L'hydrocraquage des huiles est réalisé sous pression partielle d'hydrogène au moins égale à 12.10⁶ Pa (120 Bars), en présence d'un catalyseur hydrogénant, à une température supérieure à 350°C.

Le document US 5 233 109 décrit un procédé de craquage catalytique d'une charge de type biomasse réalisée sous faible pression (1 à 10 atm) et à des températures comprises entre 300 et 680°C, en présence d'un catalyseur à base d'alumine.

Ces procédés d'hydrotraitement et d'hydrocraquage d'huiles végétales pures nécessitent toutefois la construction d'unités spécifiques, et les produits doivent être ultérieurement mélangés aux gazoles ou essences obtenus par raffinage des produits pétroliers.

On connaît également des procédés d'hydrotraitement d'une charge d'origine pétrolière de type gazole mélangée à une charge d'huiles végétales et/ou de graisses animales.

Par exemple, le document EP 1 693 432 décrit un procédé d'hydrotraitement d'une charge d'origine pétrolière mélangée à de l'huile végétale.

Ainsi, si l'on connaît des procédés d'hydrotraitement d'une charge d'origine pétrolière de type gazole mélangée à une charge d'huiles végétales et/ou de graisses animales, il n'existe pas actuellement de procédés d'hydrocraquage conventionnels d'une charge d'origine pétrolière en présence d'une charge d'huiles végétales et/ou de graisses animales.

Le procédé d'hydrocraquage conventionnel est un procédé qui permet une conversion élevée (70-100% masse) des distillats lourds à haute pression (100-200 bars de pression totale). L'hydrocraquage travaille à des températures relativement basses (350 à 430°C) sous une forte pression partielle d'hydrogène (60 à 150 bars), ce qui permet de limiter les dépôts de coke sur le catalyseur.

Les charges généralement utilisées pour l'hydrocraquage conventionnel sont les distillats sous vide, les gazoles issus de procédé de conversion et les résidus désasphaltés, les produits étant le propane, butane, naphta, kérosène, gazole, base pour huiles lubrifiantes, charge de craquage catalytique.

Les réactions mises en oeuvre dans un procédé d'hydrocraquage conventionnel sont des réactions d'hydrotraitement (hydrodésulfuration, désazotation, hydrogénation catalytique) et les réactions d'hydrocraquage proprement dites (coupure des liaisons C-C) ou de réarrangement C-C (hydroisomérisation).

Dans le procédé d'hydrocraquage, les réactions d'hydrotraitement visent essentiellement à réduire la teneur en soufre, en azote et en composés aromatiques de la charge. Elles sont généralement réalisées dans un réacteur de prétraitement en présence d'un catalyseur classique d'hydrotraitement.

Les réactions d'hydrocraquage sont quant à elles réalisées dans un réacteur d'hydrocraquage en présence d'un catalyseur bifonctionnel comprenant une fonction hydro-déshydrogénante et une fonction acide.

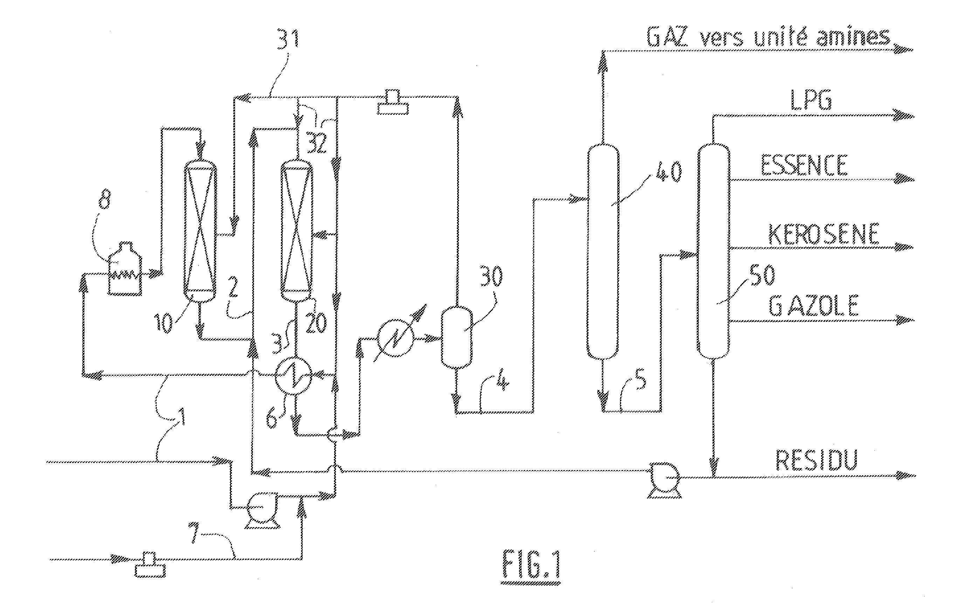

Le schéma de procédé généralement utilisé est un schéma en une étape tel que celui représenté sur la figure 1. Dans cette configuration, la charge est préalablement traitée dans un réacteur de prétraitement, puis la totalité des effluents, gaz y compris, est admise sur le catalyseur d'hydrocraquage dans le réacteur d'hydrocraquage, dans lequel les réactions de conversion et la continuation des réactions d'hydrogénation ont lieu. Ce schéma intègre donc en une seule étape l'ensemble des réactions d'hydrotraitement et d'hydrocraquage.

Un autre schéma de procédé utilisé est un schéma en deux étapes, lequel comprend un réacteur d'hydrocraquage supplémentaire en aval du réacteur d'hydrocraquage habituel, dans lequel est envoyée la fraction non convertie. Ce schéma, plus coûteux, est utilisé surtout pour des charges à forte teneur en azote ou pour maximiser le rendement en distillats moyens.

La Demanderesse a mis au point un procédé d'hydrocraquage simultané de charges d'origine pétrolière et de charges d'origine biologique du type huiles végétales et/ou animales. Ce procédé est avantageusement mis en oeuvre selon un schéma en une étape tel que mentionné ci-dessus, mais il pourrait également être mis en oeuvre selon un schéma en deux étapes.

L'invention concerne ainsi un procédé d'hydrocraquage d'une charge d'origine pétrolière dans lequel la charge d'origine pétrolière subit un hydrotraitement dans un réacteur de prétraitement en lit fixe suivi d'un hydrocraquage dans au moins un réacteur d'hydrocraquage en lit fixe, **caractérisé en ce qu**'une charge d'origine biologique du type huiles végétales et/ou animales est introduite dans ledit réacteur de prétraitement.

La Demanderesse a constaté de manière surprenante, que la charge d'origine biologique subissait un hydrotraitement au niveau du réacteur de prétraitement, mais que la quasi-totalité des n-paraffines ainsi formées ne subissaient pas d'hydrocraquage dans le réacteur d'hydrocraquage, et se retrouvent dans les produits liquides, et très majoritairement dans la coupe gazole obtenue. En effet, les triglycérides de la charge d'origine biologique sont complètement décomposés en paraffines appartenant à l'intervalle de distillation des gazoles dans le réacteur de prétraitement, et sont très peu convertis par le réacteur d'hydrocraquage, contrairement à ce qu'on aurait pu attendre, compte tenu des conditions réactionnelles sévères du réacteur d'hydrocraquage.

De plus, et de façon étonnante, il a été constaté que les quantités de CO et CO₂ formées sont faibles, en comparaison aux quantités formées dans le procédé d'hydrotraitement de coupes pétrolières de type gazole en mélange avec des coupes d'origine biologique du type huiles végétales et/ou graisses animales. En effet, la décarboxylation/décarbonylation des molécules d'acide gras contenues dans les triglycérides, provoque l'émission de gaz CO, CO₂ diminuant la pression partielle d'hydrogène. De plus, outre les problèmes de sécurité sur les personnes, le CO est un inhibiteur réversible de l'activité désulfurante du catalyseur d'hydrotraitement et d'hydrocraquage. Or, la mise en oeuvre du procédé selon l'invention ne conduit qu'à une faible formation des gaz CO et CO₂, de telle sorte que le gaz de recycle n'en contient qu'une faible quantité, et que les catalyseurs d'hydrotraitement et d'hydrocraquage conservent une bonne activité catalytique.

Par ailleurs, la coupe gazole obtenue contient une teneur en biocarburant importante, présentant un meilleur indice de cétane et une plus faible densité.

Cette introduction de biocarburant permet d'augmenter le rendement en gazole d'une unité pour une même quantité de l'effluent ayant un point initial d'ébullition supérieur à 375°C (fraction non convertie).

Le procédé selon l'invention permet ainsi d'introduire du biocarburant dans le gazole produit, sans modification notable des unités d'hydrocraquage existantes.

Avantageusement, la charge d'origine biologique est mélangée à la charge d'origine pétrolière avant son introduction dans le réacteur de prétraitement.

La forte exothermicité de l'hydrotraitement des triglycérides de la biomasse est alors contrôlée par la présence de la charge d'origine pétrolière, ce qui permet d'éviter de modifier le réacteur de prétraitement par exemple à des taux d'incorporation inférieurs à 30%.

Par ailleurs, l'exothermicité liée à l'hydrotraitement de la charge d'origine biologique permet d'améliorer le bilan thermique de l'unité d'hydrocraquage selon l'invention. En effet, l'exothermicité liée à l'hydrotraitement de la charge d'origine biologique permet, en outre, de diminuer la température d'entrée du réacteur de prétraitement tout en conservant une température moyenne réactionnelle équivalente, dans ce réacteur de prétraitement. Par température d'entrée, on entend la température à laquelle les fluides entrent dans le réacteur de prétraitement. La température moyenne réactionnelle est la température moyenne à l'intérieur du réacteur.

La charge d'origine pétrolière est avantageusement choisie parmi les distillats de distillation sous vide, tel que le VGO (vacuum gas oil), les gazoles issus de procédé de conversion et les résidus désasphaltés.

Les huiles végétales ou animales utilisées selon l'invention sont composées majoritairement de triglycérides d'acides gras (>90% en poids), les longueurs de chaîne dépendant de la nature de l'huile utilisée.

Les huiles végétales peuvent en particulier être l'huile de palme, l'huile de soja, l'huile de colza, l'huile de tournesol, ou un mélange de deux ou plusieurs de ces huiles. Ces huiles vont produire essentiellement des paraffines en C15 à C18.

Une façon particulièrement avantageuse d'utiliser l'invention, est d'utiliser préférentiellement l'huile de soja ou toute autre huile végétale ou d'origine animale susceptible de produire par hydrotraitement un maximum de paraffines en C 15 à C 18, de préférence en C 15 ou C16, de façon à induire une augmentation importante de l'indice de cétane des charges produites tout en diminuant le plus possible la densité.

Comme graisses animales, on peut par exemple utiliser de la graisse de poisson.

Dans le réacteur de prétraitement, on traite la charge sur au moins un lit catalytique contenant au moins un catalyseur à base d'oxydes métalliques choisis parmi les oxydes de NiMo, CoMo, NiW, PtPd, ou un mélange de deux ou plusieurs de ceux-ci.

Les lits catalytiques contenant des oxydes de NiW présentent l'avantage de catalyser les réactions d'isomérisation, ce qui peut permettre d'améliorer, c'est-à-dire de réduire, le point de trouble du produit fini.

Les lits catalytiques contenant des catalyseurs de type oxydes de NiMo ont un fort pouvoir hydrogénant et hydrodéoxygénant des triglycérides.

On peut également envisager, de façon particulièrement avantageuse de traiter la charge dans le réacteur de prétraitement au moyen de plusieurs lits successifs de catalyseurs, avec, par exemple, un premier lit contenant des oxydes de NiMo pour améliorer l'hydrogénation des triglycérides de la charge et/ou des oxydes de NiW pour catalyser les réactions d'isomérisation, et le ou les lits catalytiques suivants contenant des catalyseurs à base de CoMo qui présentent une bonne performance en hydrodésulfurisation à basse pression d'hydrogène (l'hydrogène ayant été en partie consommé par l'hydrogénation en présence du catalyseur à base de NiMo).

Les proportions des différents catalyseurs du réacteur de prétraitement seront déterminées en fonction des réactions que l'on souhaite favoriser.

L'homme du métier pourra choisir les conditions opérationnelles usuelles d'un procédé d'hydrocraquage conventionnel pour la mise en oeuvre du procédé selon l'invention : un taux de conversion apparent plus important peut alors être obtenu. En effet, la charge d'origine biologique est totalement convertie en coupes ayant un point final d'ébullition inférieur à 375°C.

Il pourra également choisir les conditions opérationnelles de manière à maintenir le même taux de conversion de la charge, ce qui permet d'opérer à plus basse température dans le réacteur de craquage, et d'améliorer le bilan thermique de l'unité d'hydrocraquage selon l'invention.

L'invention est maintenant décrite en référence au dessin annexé, non limitatif, dans lequel la figure 1 est un schéma simplifié d'une unité d'hydrocraquage conventionnelle.

La figure 1 représente un schéma simplifié d'une unité d'hydrocraquage conventionnelle à une étape.

Cette unité comprend :
- un premier réacteur de prétraitement 10,
- un deuxième réacteur d'hydrocraquage 20,
- une zone de séparation comprenant un ballon séparateur haute pression 30 suivi d'un débutaniseur 40,
- une colonne de distillation 50.

La charge à traiter est introduite dans le réacteur de prétraitement 10 au moyen d'une ligne 1. Ce réacteur contient un ou plusieurs lits de catalyseurs d'hydrotraitement.

Une ligne 2 récupère la totalité des effluents en sortie du réacteur de prétraitement 10 et la conduit au réacteur d'hydrocraquage 20, lequel contient un ou plusieurs lits de catalyseurs d'hydrocraquage conventionnels.

La totalité des effluents en sortie du réacteur d'hydrocraquage 20 est récupérée dans une ligne 3 et amenée au ballon séparateur haute pression 30.

Ce dernier fonctionne à une pression de l'ordre de 55 bars et permet de séparer les effluents gazeux riches en H₂, H₂S, NH₃, ainsi que les hydrocarbures les plus volatils en C1 et C2, des effluents liquides.

Les effluents liquides en sortie du séparateur HP sont récupérés dans une ligne 4 et amenés au débutaniseur 40, qui est une colonne de distillation permettant de séparer les fractions les plus volatiles (C3, C4). Les effluents les moins volatils sortant du débutaniseur 40 sont récupérés dans une ligne 5 et amenés dans une colonne de distillation 50 permettant de récupérer les coupes essences, kérosène, gazole, ainsi que les fractions non converties.

Un échangeur de chaleur 6 est placé en aval du réacteur d'hydrocraquage 20 sur la ligne 3 afin de chauffer la charge circulant dans la ligne 1, en amont du réacteur de prétraitement 10.

En amont de cet échangeur de chaleur 6, une ligne 7, raccordée sur la ligne 1, apporte à la charge à traiter un gaz riche en H₂.

En aval de l'échangeur de chaleur 6, et en amont du réacteur de prétraitement 10, la charge mélangée au gaz riche en H₂ circulant dans la ligne 1 est chauffée par un four 8.

Ainsi, la charge est mélangée au gaz riche en hydrogène, puis portée à la température de réaction par l'échangeur de chaleur 6 et le four 8 avant son entrée dans le réacteur de prétraitement 10. Elle passe ensuite dans le réacteur d'hydrocraquage 20.

Les effluents gazeux sortant du ballon séparateur 30 peuvent être renvoyés via des lignes 31 et 32 dans les deux réacteurs 10 et 20 et éventuellement dans la charge avant son arrivée dans l'échangeur de chaleur 6.

Toutefois, l'incorporation d'une charge d'origine biologique à la charge d'origine pétrolière conduit à la formation de nouveaux produits (CO, CO₂ H₂O qui vont se retrouver dans ces gaz recyclés, en sortie du ballon 30. Il peut alors être avantageux de prévoir des condenseurs afin d'éliminer l'eau et/ou une unité de traitement et de séparation du monoxyde de carbone produit.

Avantageusement, le procédé selon l'invention comprend un traitement de gaz de recycle avant sa réinjection, notamment, dans le réacteur de prétraitement. Au cours de ce traitement supplémentaire, on traite le monoxyde de carbone présent dans ledit gaz de recycle et on le sépare dudit gaz de recycle avant la réinjection de ce dernier dans le réacteur de prétraitement.

Le gaz de recycle ainsi traité, peut être réinjecté à différents niveaux dans le réacteur de prétraitement et/ou d'hydrocraquage.

Une telle unité de traitement et de séparation du monoxyde de carbone produit peut être une unité de conversion du monoxyde de carbone en dioxyde de carbone selon la réaction :

CO + H₂O → CO₂ + H₂

Le dioxyde de carbone résultant peut alors être facilement éliminé, par exemple, par un lavage aux amines, tandis que l'on peut récupérer l'hydrogène produit pour le réinjecter dans les réacteurs ou le mélanger au gaz riche en hydrogène mélangé à la charge.

Une telle unité de conversion du CO peut être placée en sortie du gaz séparé par le séparateur haute pression 30.

### Exemples

Trois charges ont été traitées dans une unité pilote d'hydrocraquage. La première est constituée d'un VGO. La deuxième et la troisième charge sont constituées d'un mélange VGO et d'huiles végétales.

La charge de VGO a été traitée sans incorporation d'huiles végétales dans l'exemple 1, qui sert de référence, et avec 10 % et 30 % en poids d'huile de soja dans l'exemple 2 et l'exemple 3 respectivement.

Les conditions d'expérimentation sont détaillées ci-après.

### Installation

Le procédé selon l'invention a été testé sur une unité pilote selon un schéma du type de celui décrit en référence à la figure 1, avec un écoulement à co-courant des flux de liquides et de gaz.

Le profil de température des réacteurs est constant, les réacteurs fonctionnant en mode isotherme.

L'unité pilote ne possède pas de recyclage des gaz et la charge est traitée en une seule passe, c'est-à-dire en « Once through » selon les spécialistes.

La pureté de l'hydrogène injecté dans le pilote est de 100%.

La composition des effluents gazeux en sortie du débutaniseur est donnée par un analyseur en ligne par chromatographie. Une mesure précise du CO et CO₂ contenus dans ces effluents gazeux est réalisée via une poche de prélèvement.

Les effluents liquides en fond de débutaniseur ont été analysés avant d'être renvoyés à la colonne de distillation.

### Catalyseurs

Les principales propriétés des catalyseurs utilisés sont reportées dans le tableau 1. Ces catalyseurs sont chargés en mélange avec du SiC 0,21mm.

Le chargement a été effectué au moyen d'une bande transporteuse.

Réacteur de prétraitement : un lit catalytique contenant 50% de catalyseur A et 50% de SiC 0,21mm.

Réacteur d'hydrocraquage : trois lits catalytiques contenant respectivement, de haut en bas du réacteur :
- 1^{er} lit : 1/6 catalyseur B + 5/6 SiC 0,21mm
- 2^{ème} lit : 1/3 catalyseur B + 5/6 SiC 0,21mm
- 3^{ème} lit : 1/3 catalyseur C + 2 / 3 SiC 0,21mm.

**Tableau 1 : Propriétés des catalyseurs utilisés**

| | Catalyseur A | Catalyseur B | Catalyseur C |
|---|---|---|---|
| Fonction | prétraitement | craquage | Post-traitement |
| % volumique | 67,9 | 26,9 | 5,2 |
| Type | NiMo/Al₂O₃ | NiMo/zéolithe | CoMo/ Al₂O₃ |
| Forme | trilobe | cylindre | trilobe |
| Diamètre (mm) | 1,2 | 1,6 | 1,1 |
| Densité d e chargement (kg/m³) | 0,738 | 0,790 | 0,660 |

Le catalyseur C a une fonction de post-traitement qui consiste à éviter les réactions secondaires de recombinaison d'oléfines avec du H₂S, à l'origine de produits soufrés qui rendent difficile l'obtention de produits à très basse teneur en soufre.

Les catalyseurs A, B et C sont des catalyseurs typiques des procédés d'hydrocraquage conventionnels.

### Charge étudiée

Les caractéristiques de la charge VGO et de l'huile de soja sont reportées dans les tableaux 2 et 3 respectivement.

L'huile de soja utilisée est de qualité alimentaire.

L'huile de soja présente la particularité de contenir une proportion élevée de chaînes de 18 atomes de carbone : les chaînes en C18 représentent 87,3% pds des acides contenus dans l'huile, les chaînes en C16 représentent 11,3% pds. Par conséquent, l'hydrogénation de triglycérides de l'huile de soja devrait conduire à la formation de chaînes paraffiniques en C18 (et/ou C17 en cas de décarbonylation ou de décarboxylation), et en plus faible proportion, en C16 et/ou C15.

**Tableau 2 : caractéristiques de la charge VGO**

| | |
|---|---|
| Densité à 15°C | 0,9057 |
| Teneur en soufre (% en poids) | 1,38 |
| Teneur en azote (ppm) dont teneur en azote basique | 1177 403 |
| Point d'écoulement (°C) | -12 |

| Température de distillation | |
|---|---|
| (°C, ASTM D86) | |
| 5% | 303 |
| 30% | 384 |
| 50% | 415 |
| 95% | 531 |
| 99% | 579 |
| Teneur en polyaromatiques (% en poids) | 31,3 |
| Teneur totale en aromatiques (% en poids) | 49,8 |
| Composés polaires : résines (% en poids) | 3,5 |
| Asphaltènes (ppm) | < 500 |
| Ni (ppm) | 0,2 |
| V (ppm) | 0,7 |

**Tableau 3 : caractéristiques de l'huile de soja**

| | | |
|---|---|---|
| Densité à 15°C (calculée) | | 0,9204 |

| Composition en acide (pourcentages en poids) | | |
|---|---|---|
| Acide laurique | 12 : 0 | 0 |
| Acide myristique | 14 : 0 | 0,1 |
| Acide palmitique | 16 : 0 | 4,8 |
| Acide palmitoléique | 16 : 1 | 0,3 |
| Acide margarique | 17 : 0 | 0,1 |
| | 17 : 1 | 0 |
| Acide stéarique | 18 : 0 | 1,7 |
| Acide oléique | 18 : 1 | 61,3 |
| Acide linoléique | 18 : 2 | 20,4 |
| Acide linolénique | 18 : 3 | 8,9 |
| Acide arachidique | 20 : 0 | 0,6 |
| Acide gondoïque | 20 : 1 | 1,2 |

| GPC : | | |
|---|---|---|
| Acides gras libres | | 5,1 |
| Monoglycérides | | 92,1 |

| Teneur en éléments (ppm) | | |
|---|---|---|
| Phosphore | | < 5 |
| Calcium | | < 2 |
| Cuivre | | < 1 |
| Fer | | < 1 |
| Magnésium | | < 1 |
| Sodium | | < 1 |
| Chlore | | < 5 |

| Teneur organique | | |
|---|---|---|
| Carbone (%pds) | | 77,75 |
| Hydrogène (%pds) | | 11,71 |
| Oxygène (%pds) | | 11,07 |
| Azote (ppm) | | 6 |

Le tableau 4 indique la densité et la teneur en soufre et en azote des charges des exemples 1 à 3.

**Tableau 4 : caractéristiques des charges des exemples 1 à 3**

| | Densité à 15°C | Teneur en soufre (% en poids) | Teneur en azote (ppm) | GPC (triglycérides) (% en poids) |
|---|---|---|---|---|
| **Exemple 1** | 0,9057 | 1,38 | 1177 | 0 |
| **Exemple 2** | 0,9074 | 1,24 | 1060 | 10,0 |
| **Exemple 3** | 0,9101 | 0,97 | 830 | 30,0 |

### Conditions opératoires

Les conditions opératoires sont reportées dans le tableau 5.

**Tableau 5 : Conditions opératoires**

| | | Réacteur de prétraitement | Réacteur d'hydrocraquage |
|---|---|---|---|
| Pression totale (bar) | | 131 | 131 |
| H₂/HC (Nl/1) | | 935 | 570 |
| VVH (h⁻¹) | | 1,2 | 2,6 |
| Température (°C) | Exemple 1 | 391 | 394 |
| | Exemple 2 | 391 | 390 |
| | Exemple 3 | 391 | 384 |

La température du réacteur d'hydrocraquage est fixée de façon à obtenir la même conversion apparente 375°C -, c'est-à-dire pour produire la même quantité d'effluent ayant un point final d'ébullition inférieur à 375°C (coupes 375°C -).

Par conversion « apparente » en une coupe particulière, on entend la conversion déterminée en mesurant la quantité totale de cette coupe dans l'effluent, y compris la quantité de la coupe considérée, présente dans la charge avant sa conversion.

Le passage d'une charge de 100%pds VGO (exemple 1) à une charge contenant 90%pds VGO + 10%pds d'huile de soja (exemple 2) s'est traduit par une exothermicité supplémentaire de 8°C localisée en entrée du réacteur de prétraitement. Cette exothermie est le signe que les réactions chimiques liées à l'introduction d'huile de soja dans la charge sont très rapides (hydrogénation des oléfines, décomposition des triglycérides puis des acides gras) et ont lieu en tête de la zone de prétraitement.

La quantité de triglycérides mesurée en sortie du réacteur de prétraitement, dans les exemples 2 et 3) est inférieure à la limite détectable (<100mg/1), confirmant la décomposition des triglycérides dans le réacteur.

Pour une même température du réacteur de prétraitement, la densité de l'effluent en sortie du réacteur de prétraitement est significativement plus faible lorsque la charge contient de l'huile de soja.

De plus, pour atteindre une même conversion apparente 375°C - en sortie de l'unité d'hydrocraquage (c'est-à-dire pour produire la même quantité d'effluent ayant un point final d'ébullition inférieur à 375°C), la température du réacteur d'hydrocraquage est abaissée.

### Rendements

Le tableau 6 reprend les rendements obtenus pour les trois types de charge.

**Tableau 6 : Rendement en effluents des exemples 1 à 3 à iso-conversion apparente 375°C - (c'est-à-dire pour produire la même quantité d'effluent ayant un point final d'ébullition inférieur à 375°C)**

| **Exemple** | **1** | **2** | **3** |
|---|---|---|---|
| **Rendements en % poids** | | | |
| H₂S | 1,47 | 1,31 | 1,03 |
| NH₃ | 0,14 | 0,13 | 0,10 |
| H₂O | 0 | 1,17 | 3,45 |
| CO | 0 | 0,04 | 0,13 |
| CO₂ | 0 | 0,07 | 0,21 |
| C₁ | 0,11 | 0,29 | 0,64 |
| C₂ | 0,17 | 0,15 | 0,11 |
| C₃ | 0,57 | 0,89 | 1,55 |
| C₄ | 2,47 | 2,58 | 2,65 |
| Essence légère C₅ - 65°C | 5,86 | 4,87 | 3,12 |
| Essence lourde 65-145°C | 12,10 | 8,86 | 6,45 |
| Coupe kérosène 145-250 °C | 22,81 | 19,46 | 9,45 |
| **Coupe gazole 250-375 °C** | **28,99** | **34,72** | **46,18** |
| Coupe 375°C + | 27,33 | 27,68 | 27,50 |

A iso-conversion apparente de 375°C -, l'incorporation d'huile végétale se traduit par :
- une diminution des rendements en H₂S et NH₃,
- l'apparition de nouveaux produits : CO, CO₂, H₂O,
- l'augmentation du rendement en méthane
- l'augmentation du rendement en propane
- une baisse des rendements en essence légère, essence lourde et kérosène
- l'augmentation du rendement en gazole (+5,8%pds pour l'exemple 2 et +17,2%pds pour l'exemple 3 par rapport à l'exemple 1)

La diminution des rendements en H₂S et NH₃ est due à l'effet de dilution du VGO par l'huile de soja, cette dernière étant pauvre en soufre et en azote.

Le CO et le CO₂ sont formés par décarboxylation ou décarbonylation des molécules d'acides gras contenues dans les triglycérides, entraînant des paraffines ayant un nombre impair d'atomes de carbone. En l'absence de ces réactions, les acides gras sont hydrogénés pour donner des n-paraffines ayant un nombre pair d'atomes de carbone et deux molécules d'eau.

L'augmentation du rendement en méthane est quant à elle liée à la réaction de méthanation du CO :

CO+3H₂ →CH₄ + H₂O

qui contribue également à la formation d'eau.

D'après les résultats du tableau 6, les molécules CO, CO₂ CH₄ issues de l'huile de soja sont formées dans les ratios suivants pour l'exemple 2:

CO/CO₂ = 1,015 mol/mol

CO/CH₄ = 0,132 mol/mol.

Il en ressort que la réaction exothermique de méthanation du CO en CH₄ est fortement favorisée dans les conditions du procédé d'hydrocraquage (forte pression partielle de H₂), ce qui permet de limiter la quantité de CO produite.

L'augmentation du rendement en propane est due à l'hydrogénation des triglycérides qui conduit au détachement du motif glycérol placé au centre de chaque molécule de triglycéride. Ainsi, une mole de triglycéride aboutit à la formation d'une mole de propane. On calcule que 10% pds d'huile de soja conduit à un rendement théorique de 0,5%pds de propane.

Les paraffines issues des triglycérides se retrouvent à 96%pds dans la coupe gazole et sont donc très peu craquées (l'intervalle de distillation 250-350°C correspond aux n-paraffines de C14 à C20).

Les coupes d'essence et de kérosène contiennent donc vraisemblablement très peu de molécules issues des triglycérides.

### Qualité des produits

L'incorporation d'huile végétale en charge d'une unité d'hydrocraquage a pour conséquence d'ajouter des normales paraffines dans le produit final.

Le tableau 10 regroupe les caractéristiques du gazole obtenu dans les trois exemples.

**Tableau 7 : Qualité de la coupe gazole (250-375 °C) dans l'effluent des exemples 1 à 3**

| **Exemple** | **1** | **2** | **3** |
|---|---|---|---|
| Densité à 15°C | 0,8305 | 0,8213 | 0,8088 |
| Point de trouble (°C) | -3 | 1 | 8 |
| Soufre (ppm) | 5 | 4 | 4 |
| Indice cétane calculé | 71,3 | 74,1 | 77,8 |
| GPC (triglycérides) (% poids) | 0 | < 0,05 | < 0,05 |
| **Teneur en bio-gazole dans la coupe gazole (% poids)** | **O** | **23,7** | **56,1** |

| Température de distillation | | | |
|---|---|---|---|
| (°C, ASTM D86) | | | |
| 5% (% de produit distillé) | 257 | 253 | 255 |
| 20% | 295 | 289 | 290 |
| 50% | 319 | 308 | 310 |
| 80% | 374 | 364 | 366 |
| 95% | 383 | 382 | 383 |

L'incorporation d'huile de soja dans une charge VGO entraîne des modifications des propriétés de la coupe gazole (incorporation de paraffines normales ou isomérisées) :
- augmentation de l'indice de cétane
- diminution de la densité
- augmentation du point de trouble.

L'augmentation du point de trouble indique que les paraffines issues de l'huile de soja sont peu isomérisées.

Sachant que le rendement théorique maximal en paraffines est de 84,1 %pds (d'après le bilan massique), Cette étude montre que les n-paraffines issues des triglycérides se retrouvent à 96%pds dans la coupe gazole.

## Revendications

1. Procédé d'hydrocraquage d'une charge d'origine pétrolière dans lequel la charge d'origine pétrolière subit un hydrotraitement dans un réacteur de prétraitement en lit fixe suivi d'un hydrocraquage dans au moins un réacteur d'hydrocraquage en lit fixe, **caractérisé en ce qu'**une charge d'origine biologique du type huiles végétales et/ou animales est introduite dans ledit réacteur de prétraitement, ledit procédé comprenant un traitement de gaz de recycle avant sa réinjection, notamment dans le réacteur de prétraitement, dans lequel on effectue un traitement supplémentaire au cours duquel on traite le monoxyde de carbone présent dans ledit gaz de recycle et on le sépare dudit gaz de recycle avant sa réinjection, notamment dans le réacteur de prétraitement.

2. Procédé d'hydrocraquage selon la revendication 1, **caractérisé en ce que** la charge d'origine biologique est mélangée à la charge d'origine pétrolière avant son introduction dans le réacteur de prétraitement.

3. Procédé d'hydrocraquage selon la revendication 1 ou 2, **caractérisé en ce que** l'on introduit des huiles végétales et/ou animales jusqu'à un taux de 30 % en masse par rapport à la charge d'origine pétrolière.

4. Procédé d'hydrocraquage selon l'une des revendications 1 à 3, **caractérisé en ce que** le taux d'huiles végétales et/ou de graisses animales est de 2,5 à 25 % en masse par rapport à la charge d'origine pétrolière.

5. Procédé d'hydrocraquage selon l'une des revendications 1 à 4, dans lequel la charge d'origine pétrolière est choisie parmi les distillats de distillation sous vide, les gazoles issus de procédé de conversion et les résidus désasphaltés.

6. Procédé d'hydrocraquage selon l'une des revendications 1 à 5, dans lequel les huiles végétales sont choisies parmi l'huile de palme, l'huile de soja, l'huile de colza, l'huile de tournesol, de préférence l'huile de palme, ou un mélange de deux ou plusieurs de ces huiles.
